(19) **Europäisches Patentamt**
**European Patent Office**
**Office européen des brevets**

(11) **EP 2 014 062 B1**

(12) **EUROPÄISCHE PATENTSCHRIFT**

(45) Veröffentlichungstag und Bekanntmachung des Hinweises auf die Patenterteilung:
**10.02.2010 Patentblatt 2010/06**

(21) Anmeldenummer: **07728437.0**

(22) Anmeldetag: **24.04.2007**

(51) Int Cl.:
***H04L 29/12*** *(2006.01)*

(86) Internationale Anmeldenummer:
**PCT/EP2007/053981**

(87) Internationale Veröffentlichungsnummer:
**WO 2007/122229 (01.11.2007 Gazette 2007/44)**

(54) **VERFAHREN ZUM BETREIBEN EINES DATENBUSSES UND DATENBUSSYSTEM**

METHOD FOR THE OPERATION OF A DATA BUS, AND DATA BUS SYSTEM

PROCÉDÉ POUR FAIRE FONCTIONNER UN BUS DE DONNÉES ET SYSTÈME DE BUS DE DONNÉES

(84) Benannte Vertragsstaaten:
**DE FR GB**

(30) Priorität: **24.04.2006 DE 102006018871**

(43) Veröffentlichungstag der Anmeldung:
**14.01.2009 Patentblatt 2009/03**

(73) Patentinhaber: **OCE Printing Systems GmbH**
**85586 Poing (DE)**

(72) Erfinder:
• **KREPPOLD, Thomas**
**85399 Goldach (DE)**
• **BEST, Arno**
**85716 Lohof (DE)**
• **GIBISCH, Herbert**
**81825 München (DE)**
• **HEIMBACH, Robert**
**81829 München (DE)**
• **ANDRESEN, Hermann**
**84431 Heldenstein (DE)**

(74) Vertreter: **Schaumburg, Thoenes, Thurn, Landskron, Eckert**
**Patentanwälte**
**Postfach 86 07 48**
**81634 München (DE)**

(56) Entgegenhaltungen:
**EP-A1- 0 493 905     WO-A-94/07318**

**Beschreibung**

Die Erfindung betrifft ein Verfahren zum Betreiben eines Datenbusses und ein Datenbussystem, insbesondere zum Steuern von Geräten, an denen mehrere Busteilnehmer mit jeweils einer für sie spezifischen Seriennummer angeschlossen sind, wie z.B. von Druckern, insbesondere von elektrofotografischen Hochleistungsdruckern.

Ein typischer Datenbus zum Steuern von Geräten ist der CAN-Bus. Mit dem CAN-Bus werden einzelne Busteilnehmer, die elektrische Module bzw. Baugruppen sind, eines Gerätes, wie z.B. einer Druckvorrichtung, miteinander verbunden. Der CAN-Bus ist ein einfacher, kostengünstiger, serieller Datenbus, mit welchem Daten zwar sehr einfach, aber im Umfeld von Mikroprozessoren mit relativ geringer Übertragungsrate übertragen werden können. Zum Übertragen von Daten werden gemäß dem CAN-Protokoll die Daten auf mehrere Telegramme verteilt, wobei jedes Telegramm aus einem Datenblock und einem Identifier besteht.

Der CAN-Bus bzw. das entsprechende Protokoll ist in "CAN - Controller Area Network, Grundlagen und Praxis", 2 Auflage, 1997 (ISBN 3-7785-2575-1) ausführlich erläutert. Ein CAN-Bus wird üblicherweise mit einer differentiellen zwei-Draht-Leitung realisiert. Ein CAN-Datentelegramm kann ein Startbit, ein 11 Bit umfassenden Identifier, weitere 7 Steuerbits, 0 bis 8 Daten Bytes und weitere Steuerbits, die auf die Datenbytes folgen, umfassen. Der Aufbau eines CAN-Datentelegramms kann sich je nach Spezifikation unterscheiden. So gibt es eine CAN-Spezifikation 2.0A und eine CAN-Spezifikation 2.0B.

Die Arbitrierung wird bitweise und steuerungsfrei ausgeführt. Das bedeutet, dass der Sender, der sich im Datenbus gegenüber anderen Sendern aufgrund seiner Priorität durchsetzt, sein Telegramm nicht erneut senden muss. Zum Arbitrieren werden die von den Datenbytes vorgesehenen Steuerbits verwendet, wobei die Arbitrierung im wesentlichen durch die Bits der Identifier erfolgt. Aus Etschberger, Konrad, "Identifier zuordnen und Nachrichten austauschen", (ISBN 3-8259-1902-1) 1. Auflage, Jahr 1998, PRAXIS Profiline - Controller Area Network (CAN), Seite 40 bis 43, geht hervor, dass die Art der Identifiervergabe als das grundlegende strukturelle Element von CANbasierenden Systemen bezeichnet werden kann, da der Identifier einer CAN-Nachricht, deren relative Priorität und somit deren Latentszeit definiert. Außerdem bestimmt das Schema der Zuordnung von Identifiern zu CAN-Nachrichten letztlich die Kommunikationsstruktur des Netzwerks.

In CANopen ist mit einer sogenannten "minimalen Gerätekonfiguration" eine Geräte-orientiertes Vergabeschema für Identifier vorgesehen, welches einen Datenaustausch zwischen einem übergeordneten Steuergerät (Master) mit bis 127 Slave-Geräten ermöglicht. Die maximale Teilnehmerzahl in einem solchen CANopen-Netzwerk beträgt 128. Diese Teilnehmerzahl ist durch den 11 Bit Identifier begrenzt.

In Zeltwanger, Holger, "Jeder darf Senden und alle Empfangen; CAN-Kommunikation und Bus-Arbitrierung", (ISBN 3-8251-1902-1) 1. Auflage, Jahr 1998, Praxis Profiline-Controller Area Network (CAN), Seiten 5 -7 ist der Unterschied zwischen den Datentelegrammen mit Standard-Frames, die den 11 Bit Identifier aufweisen, und mit den Extended-Frames, die den 29 Bit Identifier aufweisen, ausführlich erläutert.

Aus der WO 2004/062219 geht eine Vorrichtung für einen Leitungsabschluß von 2-Draht-Leitungen, insbesondere für ein CAN-Bussystem hervor. Diese Vorrichtung weist einen ersten und zweiten Abschlusswiderstand zwischen den zwei Drähten der Datenleitung auf, wobei der erste und der zweite Abschlusswiderstand in Reihe geschaltet sind. Zwischen den beiden Abschlusswiderständen sind Schalter vorgesehen, die von einer Steuerlogik angesteuert werden. Die Steuerlogik ist mit einem Mikrocontroller verbunden, so dass nach Erhalt eines entsprechenden Signals vom Mikrocontroller die Steuerlogik, den zwischen den Abschlusswiderständen angeordneten Schalter betätigen kann. Mit dem Mikrocontroller kann die Konfiguration des Abschlusswiderstandes somit jederzeit geändert werden. Alternativ ist eine hardwaremässige Anpassung des Abschlusswiderstandes mittels einer Brücke im Kabelbaumstecker vorgesehen.

Aus der WO 02/056545 A2 geht eine Abzweigeinrichtung für einen Datenbus, wie z.B. einen CAN-Bus hervor. Mit dieser Abzweigeinrichtung können einzelne Zweige in einer sternförmigen Bus-Topologie abgekoppelt bzw. angekoppelt werden. Dies ist während des Betriebes des Datenbusses möglich. Diese Abzweigeinrichtung weist einen Schnittstellenwandler, eine Sende- und Empfängereinheit und einen oder mehrere Abschlusswiderstände auf.

Aus der DE-U1-299 07 265 und der DE-C2-197 13 240 gehen Verfahren zur automatischen Adressvergabe in Datenbus-Systemen mit mehreren Busteilnehmern hervor.

In der EP 0 493 905 A1 ist ein lokales Netzwerk mit einem Master und mehreren Slaves beschrieben, bei welchen die Netzwerkadressen nach dem Anschluss eines neuen Slaves automatisch vergeben werden. Hierbei wird anhand der Seriennummer des jeweiligen Slaves eine vorläufige Netzwerkadresse berechnet. Diese Berechnung erfolgt am Slave. Der Master ermittelt die vorläufigen Netzwerkadressen der Slaves und ordnet jedem Slave eine neue Netzwerkadresse zu, die kürzer als die vorläufige Netzwerkadresse ist. Falls ein Konflikt zwischen zwei vorläufigen Netzwerkadressen bestehen sollte, dann wird dieser Konflikt anhand der Seriennummern der entsprechenden Slaves gelöst.

Aus der WO 94/07318 geht eine Anordnung zum Verbinden von Prozessorsystemen mittels eines Datenbusses hervor. Die Signalleitungen des Datenbusses erfordern einen Abschlusswiderstand. Die Prozessorsysteme weisen jeweils einen Eingangsstecker und einen Ausgangsstecker auf, so dass sie mittels eines Kabels mit einem anderen Prozessorsystem in Reihe verbunden werden können. An einem jeden Prozessorsystem sind Abschlusswiderstände für die Signalleitungen vorgesehen. Sie werden von einer Schalteinrichtung geschaltet, die mit einem Kontakt im Ausgangsstecker elektrisch verbunden ist. Dieser Kontakt des Ausgangssteckers wird über eine Leitung des Verbindungskabels mit einem entsprechenden Kontakt eines Eingangssteckers eines darauf folgenden Prozessorsystems verbunden. Im darauf folgenden Prozessorsystem wird der entsprechende Kontakt auf eine vorbestimmte Spannung, insbesondere Masse, gelegt. Dies wird von der Schalteinrichtung zum Schalten der Abschlusswiderstände des vorhergehenden Prozessorsystems detektiert, um die Abschlusswiderstände entsprechend zu schalten. Das letzte Prozessorsystem der in Reihe geschalteten Prozessorsysteme weist am Eingangsstecker keine Verbindung zu einem weiteren Prozessorsystem auf. Der mit dem Schaltelement verbundene Kontakt des entsprechenden Eingangssteckers ist dementsprechend nicht mit dem vorbestimmten Spannungspotential verbunden. Hierdurch schaltet das Schaltelement die Abschlusswiderstände auf die entsprechenden Signalleitungen, wodurch diese abgeschlossen sind.

Geräte, wie z.B. Hochleistungsdrucker, sind modular aufgebaut. Einzelne Module oder Baugruppen sollen hierbei möglichst einfach hinzugefügt oder entfernt werden können.

Diese Module und Baugruppen sollten hierbei auch an den Datenbus angekoppelt bzw. abgekoppelt werden.

Der Erfindung liegt deshalb die Aufgabe zugrunde, ein Verfahren zum Betreiben eines Datenbusses, sowie ein Datenbussystem zu schaffen, die auf einfache Art und Weise ein Ankoppeln bzw. Abkoppeln von Busteilnehmern an den Datenbus erlauben.

Die Aufgabe wird durch ein Verfahren mit den Merkmalen des Anspruchs 1 oder des Anspruchs 7 und durch ein Datenbussystem mit den Merkmalen des Anspruchs 9 gelöst.

Vorteilhafte Ausgestaltungen der Erfindung sind in den jeweiligen Unteransprüchen angegeben.

Mit dem erfindungsgemäßen Verfahren zum Betreiben eines Datenbusses, insbesondere zum Steuern von Geräten, an denen mehrere Busteilnehmer mit jeweils einer für sie spezifischen Seriennummer angeschlossen sind, wie z.B. von Druckern, umfasst folgende Schritte:

- Anschließen eines neuen Busteilnehmers an den Datenbus,
- Erzeugen einer Antrags-Busnachricht durch den neuen Busteilnehmer, die als Identifier eine vorläufige Teilnehmer-Identifikationsnummer enthält, die von der Seriennummer des Busteilnehmers abgeleitet ist, wobei die Antrags-Busnachricht mittels des Identifiers auf dem Datenbus arbitriert wird,

- Vergabe einer endgültigen Teilnehmer-Identifikationsnummer für den neuen Busteilnehmer nach dem Empfang der Antrags-Busnachricht mit der vorläufigen Teilnehmer-Identifikationsnummer, wobei die endgültige Teilnehmer-Identifikationsnummer weniger Stellen als die Seriennummer aufweist, und
- Verwenden der endgültigen Teilnehmer-Identifikationsnummer durch den neuen Busteilnehmer als Identifier für weitere Busnachrichten.

Da erfindungsgemäß eine vorläufige Teilnehmer-Identifikationsnummer für den neuen Busteilnehmer von seiner Seriennummer abgeleitet wird, ist es möglich, den Busteilnehmer vorläufig am Datenbus einzubinden und ihm eine endgültige Teilnehmer-Identifikationsnummer zuzuweisen.

Die endgültige Teilnehmer-Identifikationsnummer ist kürzer als die Seriennummer, sodass ein kompaktes Format an Busnachrichten verwendet werden kann. Ist der Datenbus ein CAN-Bus, so ist die endgültige Teilnehmer-Identifikationsnummer vorzugsweise eine 11 Bit umfassende Zahl, so dass die kompakten Busnachrichten bzw. Telegramme nach der CAN-Spezifikation 2.0A verwendbar sind, wobei die Teilnehmer-Identifikationsnummer als Identifier in die Busnachrichten eingetragen wird.

Zusätzlich zur vorläufigen Teilnehmer-Identifikationsnummer wird ein Zeitversatz für die Antrags-Busnachricht ermittelt. Dies ist zweckmäßig, wenn die vorläufige Teilnehmer-Identifikationsnummer nicht eindeutig ist, um sicherzustellen, dass keine zwei Antrags-Busnachrichten gleichzeitig mit identischer Teilnehmer-Identifikationsnummer über den Datenbus übermittelt werden sollen.

Dieses Verfahren ist besonders geeignet zur Anwendung in einem Datenbus-System, bei dem einer der Busteilnehmer ein Master-Prozessorsystem ist und die anderen Busteilnehmer Slave-Prozessersysteme sind. Die Slave-Prozessorsysteme sind hierbei grundsätzlich beliebig auszutauschen, sofern sie unterschiedliche Seriennummern aufweisen. Das Master-Prozessorsystem nimmt hierbei die Antrags-Busnachrichten entgegen und vergibt die endgültigen Teilnehmer-Identifikationsnummern. Bei diesem System ist es möglich während des normalen Betriebes einzelne Busteilnehmer zu entfernen bzw. hinzuzufügen.

Bei einer alternativen Ausführungsform wird nach dem Anschließen eines neuen Busteilnehmers der Datenbus initialisiert. Beim Initialisieren werden alle Slave-Prozessorsysteme neu gestartet, z.B. indem deren Stromversorgung aus- oder eingeschaltet wird. Das Master-Prozessorsystem bleibt unverändert in Betrieb. Während des Initialisierungsvorganges werden Busnachrichten mit einem Identifier verwendet, in welchen die vollständige Seriennummer als Identifier eingetragen wird. Jeder Busteilnehmer schickt eine entsprechende Antrags-Busnachricht zur Vergabe der endgültigen Teilnehmer-Identifikationsnummer ab. Nach dem Initialisierungsvorgang wird hingegen ein anderer Typ von Busnachrichten verwendet, der einen kürzeren Identifier aufweist, in dem die endgültige Teilnehmer-Identifikationsnummer eintragbar ist.

Bei diesem Verfahren mit dem Initialisieren des Datenbusses werden die endgültigen Teilnehmer-Identifikationsnummern zweckmäßigerweise in der Reihenfolge vergeben, mit welcher die Antrags-Busnachrichten auf dem Datenbus übermittelt werden.

Das erfindungsgemäße Datenbussystem umfasst Datenleitungen und mehrere mittels der Datenleitungen verbundene Busteilnehmer, die jeweils als Mikroprozessorsystem ausgebildet sind, wobei.die Busteilnehmer jeweils einen Eingangsstecker und einen Ausgangsstecker derart aufweisen, dass der jeweilige Busteilnehmer mittels des Eingangssteckers an einen bestehenden Datenbus anschließbar ist und an den Ausgangsstecker eine Erweiterung des Datenbusses zu einem weiteren Busteilnehmer anschließbar ist.

Die Busteilnehmer weisen jeweils einen Abschlusswiderstand zum Abschließen der Datenleitungen auf. Die Abschlusswiderstände sind jeweils in Reihe mit einem Schaltelement geschaltet, das mit einer Steuerlogik zum Ansteuern der Schaltelemente verbunden ist. Die Steuerlogik ist mit zwei Steuer-Anschlüssen des Ausgangssteckers derart verbunden, dass es das entsprechende Schaltelement schließt, falls diese beiden Anschlüsse des Ausgangssteckers kurzgeschlossen sind. Der Eingangsstecker dieser Busteilnehmer weist an dem zu den beiden Steueranschlüssen des Ausgangssteckers korrespondierenden Anschlüssen eine Brücke auf, die diese beiden Anschlüsse derart kurzschließt, dass mittels der Brücke eine Steuerlogik eines weiteren über ein Kabel mit dem Eingangsstecker verbundenen Busteilnehmers zum Öffnen des Schaltelementes aktiviert wird.

Beim erfindungsgemäßen Datenbussystem ist jeweils an dem am Ende des Datenbusses angeordneten Busteilnehmer der Abschlusswiderstand zwischen den Datenleitungen geschaltet und somit wirksam. Bei den Busteilnehmern, die nicht am Ende des Datenbusses angeordnet sind, ist das in Reihe mit dem Abschlusswiderstand geschaltete Schaltelement geöffnet, so dass hier die Abschlusswiderstände nicht wirksam sind. Hierdurch ist sichergestellt, dass der Datenbus korrekt elektrisch abgeschlossen ist.

Mit diesem Datenbussystem kann eine lineare Topologie beliebig erweitert werden, da die innerhalb der Topologie angeordneten Busteilnehmer durch die Brücke des nächsten in Richtung zu einem Ende des Datenbusses angeordneten Busteilnehmers derart angesteuert werden, dass das in Reihe mit dem jeweiligen Abschlusswiderstand geschaltete Schaltelement geöffnet ist.

Das erfindungsgemäße Verfahren und das erfindungsgemäße Datenbussystem werden vorzugsweise bei einem CAN-Bus und insbesondere in einem elektrofotografischen Hochleistungsdrucker eingesetzt.

Die Erfindung wird nachfolgend näher beispielhaft anhand der Zeichnungen erläutert. In den Zeichnungen zeigen:

Figur 1  schematisch eine Druckvorrichtung mit einem Datenbus und mehreren Busteilnehmern,

Figur 2  schematisch vereinfacht ein erfindungsgemäßes Datenbussystem mit einem Master-Prozessorsystem und mehreren Slave-Prozessorsystemen,

Figur 3  eine Tabelle, die die Seriennummern, Zeitversätze und die vorläufigen Teilnehmer-Identifikationsnummern einzelner Busteilnehmer enthält,

Figur 4  schematisch in einem Diagramm das zeitversetzte Übertragen von Antrags-Busnachrichten, und

Figur 5  schematisch den Aufbau eines erfindungsgemäßen Datenbussystems mit linearer Topologie.

Mit dem erfindungsgemäßen Verfahren wird ein Datenbus zum Steuern von Geräten, insbesondere von elektrofotografischen Hochleistungsdruckern, betrieben. Mit dem Datenbus sind mehrere Busteilnehmer miteinander verbunden. Diese Busteilnehmer sind Module oder Baugruppen der Druckvorrichtung, die jeweils ein Prozessorsystem bzw. einen Mikrocontroller aufweisen.

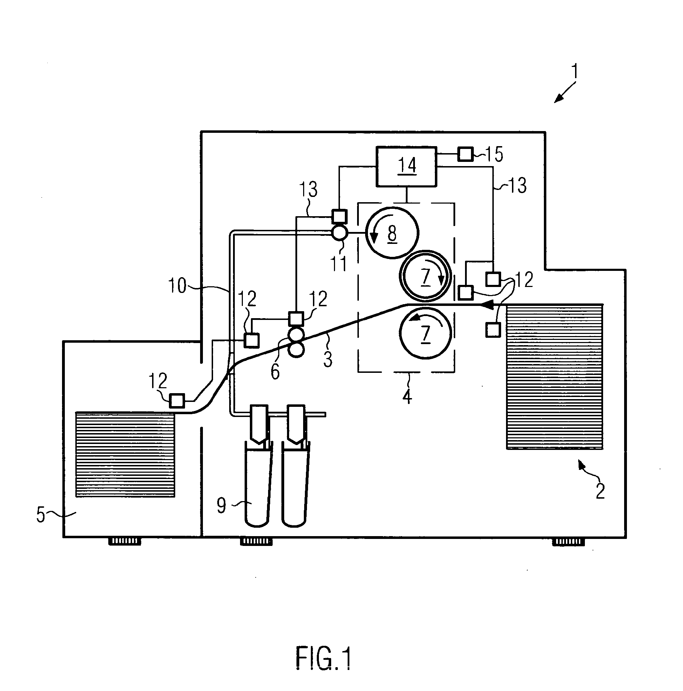

Eine solche Druckvorrichtung ist zum Beispiel ein Einzelblattdrucker 1 (Figur 1), der einen Papiereingabeschacht 2 mit einer Einrichtung (nicht dargestellt) zum Vereinzeln der nicht dargestellten Papierbögen aufweist. Die Papierbögen werden entlang eines Transportweges 3 vom Papiereingabeschacht 2 zu einem Druckwerk 4 und einem Ausgabeschacht 5 befördert.

Der Transportweg ist durch eine Vielzahl Walzenpaare 6 (in Figur 1 ist lediglich zur Vereinfachung der Darstellung ein einzelnes Paar gezeigt) und korrespondierenden Führungseinrichtungen ausgebildet. Das Druckwerk 4 weist zwei Druckwalzen 7 und eine Farbauftragswalze 8 auf. Bei elektrofotografisch arbeitenden Druckwalzen wird die Farbauftragswalze 8 mittels einer Belichtungseinheit (nicht dargestellt) belichtet, so dass sie an den belichteten/nicht belichteten Stellen Farbpartikel aufnimmt. Die Farbpartikel werden von einem entsprechenden Vorratsbehälter 9 über eine Zuführleitung 10 und ein einstellbares Ventil 11 der Farbauftragswalze 8 zugeführt.

Der Drucker 1 weist ein Steuersystem auf, das mehrere Prozessorsysteme 12 zum Ansteuern der Baugruppen der Druckvorrichtung aufweist. Baugruppen sind in der vorliegenden Erfindung jener Teil der Druckvorrichtung, der von einem Mikrocontroller bzw. einem Prozessorsystem gesteuert wird. Derartige Baugruppen sind zum Beispiel am Papiereingabeschacht 2, dem Transportweg 3, dem Druckwerk 4, dem Ausgabeschacht 5, usw. vorgesehen. Die Prozessorsysteme 12 sind über einen Datenbus 13 miteinander und mit einer zentralen Steuereinrichtung 14 verbunden. An die zentrale Steuereinrichtung 14 ist ein zentrales Speichermedium 15 gekoppelt, das beispielsweise als Festplatte ausgebildet ist.

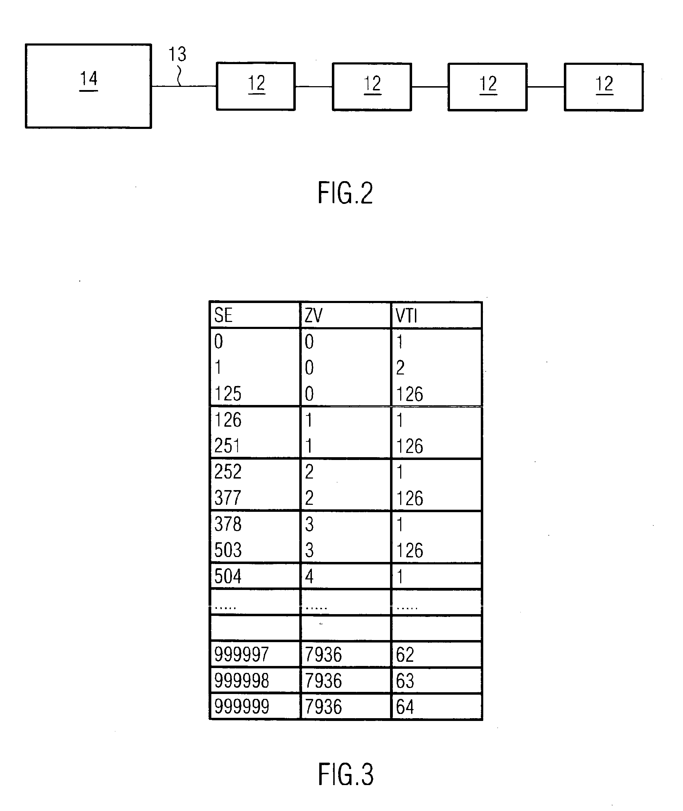

Eine typische Struktur des Datenbusses 13 ist schematisch in Figur 2 gezeigt.

Der Datenbus 13 verbindet die zentrale Steuereinrichtung 14, die ein Master-Prozessorsystem ist, mit mehreren Mikrocontrollern bzw. Slave-Prozessorsystemen 12.

Das Master-Prozessorsystem 14 steuert den Datenbus, d.h. dass es die Taktrate, mit welcher die Signale am Datenbus 13 übertragen werden, vorgibt. Das Master-Prozessorsystem 14 ist somit gegenüber den Slave-Prozessorsystemen 12 ausgezeichnet.

Der Datenbus 13 ist vorzugsweise als CAN-Bus ausgebildet, der eingangs bereits ausführlich erläutert worden ist.

Den Slave-Prozessorsystemen 12 ist jeweils eine eindeutige Seriennummer zugeordnet, d.h. dass sichergestellt ist, dass in einem Bussystem keine zwei Slave-Prozessorsysteme vorgesehen sind, die die gleiche Seriennummer besitzen. Die Seriennummer ist einem nicht-flüchtigen Speicher, z.B. einem Eeprom, auf den Slave-Prozessorsystemen gespeichert.

Bei einem ersten Ausführungsbeispiel der Erfindung werden als Busnachrichten CAN-Datentelegramme gemäß der CAN-Spezifikation 2.0A verwendet, d.h., Datentelegramme mit einem Identifier mit 11 Bit.

Nach dem Anschließen eines neuen Busteilnehmers 12 an den Datenbus 13 werden folgende Verfahrensschritte aufeinanderfolgend ausgeführt:

1) Der neue Busteilnehmer 12 sendet über den Datenbus 13 eine Melde-Busnachricht. Die Melde-Busnachricht enthält als Identifier eine bestimmte Zahl, die im vorliegenden Ausführungsbeispiel 127 ist. Anhand dieser Meldezahl im Identifier erkennt das Master-Prozessorsystem, dass ein neuer Busteilnehmer, d.h. ein neues Slave-Prozessorsystem, an den Datenbus angeschlossen ist.

2) Das Master-Prozessorsystem sendet hierauf eine Start-Busnachricht. Diese Start-Busnachricht ist zumindest an alle neu angeschlossenen Busteilnehmer gerichtet. Im vorliegenden Ausführungsbeispiel wird die Start-Busnachricht an alle Slave-Prozessorsysteme gerichtet (Broadcast-Modus) und allen Slave-Prozessorsystemen wird mit den nachfolgenden Schritten eine Teilnehmer-Identifikationsnummer zugeordnet.

3) Auf diese Start-Busnachricht senden die Slave-Prozessorsysteme eine Antrags-Busnachricht. Diese Antrags-Busnachrichten enthalten jeweils einer vorläufige Teilnehmer-Identifikationsnummer als Identifier und die Antrags-Busnachrichten werden zum Teil zeitversetzt gesendet, damit es am Datenbus keine Kollisionen mit gleichen vorläufigen Teilnehmer-Identifikationsnummern gibt. Die Berechnung der vorläufigen Teilnehmer-Identifikationsnummern und des Zeitversatzes wird unten näher erläutert.

4) Nach Empfang der Antrags-Busnachrichten vergibt das Master-Prozessorsystem endgültige Teilnehmer-Identifikationsnummern und übermittelt sie den jeweiligen Busteilnehmern mit einer Registrierungs-Busnachricht. Die Registrierungs-Busnachrichten enthalten als Identifier noch die vorläufigen Teilnehmer-Identifikationsnummern. Im Datenblock der Registierungs-Busnachrichten sind sowohl die Seriennummer des jeweiligen Busteilnehmers als auch dessen endgültige Teilnehmer-Identifikationsnummer enthalten.

5) Die Busteilnehmer empfangen die Registierungs-Busnachrichten. Sie werden anhand der vorläufigen Teilnehmer-Identifikationsnummer zugestellt. Da die vorläufigen Teilnehmer-Identifikationsnummern nicht eindeutig sein müssen, lesen die Busteilnehmer die in der Registrierungs-Busnachricht enthaltene Seriennummer und ermitteln anhand eines Vergleiches mit ihrer eigenen Seriennummer, ob die jeweilige Registrierungs-Busnachricht für sie vorgesehen ist. Falls dies der Fall ist, übernehmen sie die darin enthaltene endgültige Teilnehmer-Identifikationsnummer und speichern sie als ihre Teilnehmer-Identifikationsnummer für die weitere Kommunikation über den Datenbus ab.

Die vorläufige Teilnehmer-Identifikationsnummer VTI wird gemäß folgender Formel aus der Seriennummer SE berechnet:

$$VTI = (SE \bmod 126) + 1$$

Mit dieser Modulo-Funktion wird die Seriennummer auf einen Zahlenbereich von [1; 126] abgebildet. Im vorliegenden Ausführungsbeispiel kann die Zahl "0" nicht als VTI verwendet werden, da der Identifier = 0 bereits für das Datenbussystem vergeben ist. Weiterhin wird als vorläufige Teilnehmer-Identifikationsnummer nicht die Zahl "127" verwendet, da diese, wie es oben bereits erläutert ist, als Identifier für die Melde-Nachrichten benötigt wird.

Da die vorläufigen Teilnehmer-Identifikationsnummern nicht immer eindeutig sind, wird ein Zeitversatz berechnet, mit welchem sie auf die Start-Busnachricht des Master-Prozessorsystems antworten. Der Zeitversatz ZV wird anhand der Seriennummer SE gemäß folgender Formel berechnet:

$$ZV = (SE \; div \; 126) * DZ$$

wobei DZ eine Differenzzeit ist. Diese Differenzzeit DZ ist die Zeit, die die maximale Anzahl von Busteilnehmern, die unterschiedliche vorläufige Teilnehmer-Identifikationsnummern aufweisen, multipliziert mit der Zeit, die für die Übertragung einer Busnachricht benötigt wird. Im vorliegenden Ausführungsbeispiel ist die maximale Anzahl der Busteilnehmer mit unterschiedlichen vorläufigen Teilnehmer-Identifikationsnummern 126. Werden an dem Datenbus grundsätzlich weniger als die maximal mögliche Anzahl von Busteilnehmern mit unterschiedlichen vorläufigen Teilnehmer-Identifikationsnummern vorgesehen, so kann die Anzahl der Busteilnehmer auf die Anzahl, der maximal anschließbaren Busteilnehmer verringert werden. In der Regel beträgt die maximale Anzahl der an einem Gerät über einen CAN-Bus verbundenen Busteilnehmer 5 bis 50. Dies bedeutet, dass in der Regel diese Anzahl die Differenzzeit und damit den Zeitversatz bestimmt.

Umfasst die Antrags-Busnachricht 100 Bit und beträgt die Übertragungsrate 500 KB/s, so beträgt die Übertragungszeit für eine Antrags-Busnachricht 0,2 ms. Beträgt die maximale Anzahl an einem Gerät anschließbarer Busteilnehmer 5, so ergibt sich als Differenzzeit DZ 1 ms.

Sind die Seriennummern 6-stellige Dezimalzahlen, dann beträgt die Anzahl der möglichen Zeitversätze bzw. Zeitfenster 999.999 geteilt durch 126, was 7.936 ergibt. Diese Anzahl der möglichen Zeitfenster multipliziert mit der Differenzzeit - ist hier 7.936 ms - wird als Timeout-Zeit verwendet.

Mit der Übermittlung der Start-Busnachricht wird am Master-Prozessorsystem ein Timeout-Zähler mit der Timeout-Zeit gestartet. Nach Ablauf der Timeout-Zeit wird geprüft, ob allen Busteilnehmern eine endgültige Teilnehmer-Identifikationsnummer zugeordnet worden ist. Ist dies nicht der Fall wird der Vergabeprozess mit dem Übermitteln einer Start-Busnachricht erneut gestartet.

Bei der oben angegebenen Formel zur Berechnung des Zeitversatzes ZV bedeutet der Operator "div" eine Division ohne Rest. Im vorliegenden Ausführungsbeispiel beträgt der Divisor 126, da die Anzahl der möglichen vorläufigen Teilnehmer-Identifikationsnummern 126 ist. Sollte sich diese Anzahl ändern, muss ein entsprechend angepasster Divisor eingesetzt werden.

Figur 3 zeigt eine Tabelle mit drei Spalten. In der linken Spalte sind die Seriennummern SE, in der mittleren Spalte die Zeitversätze ZV in der Einheit der Differenzzeit und in der rechten Spalte die vorläufigen Teilnehmer-Identifikationsnummern VTI aufgeführt. Anhand dieser Tabelle kann man erkennen, dass die Seriennummern 0 bis 125 auf die vorläufigen Teilnehmer-Identifikationsnummern VTI 1 bis 126, die Seriennummern 126 bis 251 auf die vorläufigen Teilnehmer-Identifikationsnummern VTI 1 bis 126 und die Seriennummern 252 bis 377 wiederum auf die vorläufigen Teilnehmer-Identifikationsnummern 1 bis 126 abgebildet werden. Es werden somit unterschiedliche Seriennummern auf die gleichen vorläufigen Teilnehmer-Identifikationsnummern abgebildet, da deren Zahlenbereich begrenzt ist. Deshalb werden die Zeitversätze ZV ermittelt.

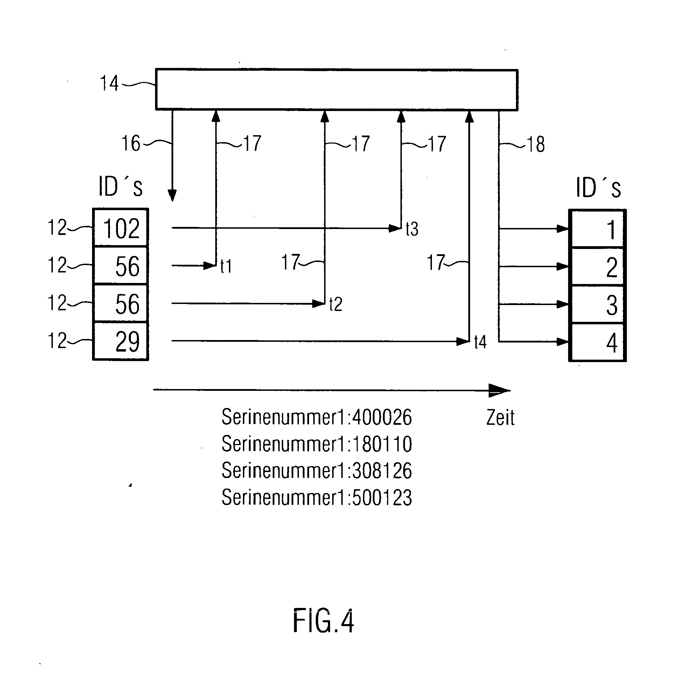

In Figur 4 ist ein Beispiel mit vier Slave-Mikropozessorsystemen 12 dargestellt, die die Seriennummern 400026, 180110, 308126 und 500123 besitzen. Diese Seriennummern ergeben als vorläufige Teilnehmer-Identifikationsnummern VTI die Werte 102, 56, 56 und 29. Auf die Start-Busnachricht 16 senden die Busteilnehmer 12, bzw. die Slave-Prozessorsysteme, ihre Antrags-Busnachrichten 17, wobei diese gegenüber der Start-Busnachricht mit dem berechneten Zeitversatz über den Datenbus übertragen werden. Das Master-Prozessorsystem 14 empfängt die einzelnen Registrierungs-Busnachrichten und vergibt die endgültigen Teilnehmer-Identifikationsnummern. Die Vergabe der endgültigen Teilnehmer-Identifikationsnummern kann an sich beliebig erfolgen. Wesentlich ist lediglich, dass jede endgültige Teilnehmer-Identifikationsnummer nur einmal vergeben wird. Die endgültigen Teilnehmer-Identifikationsnummern werden dann mittels der Registierungs-Busnachrichten 18 zu den einzelnen Busteilnehmern übermittelt.

Mit dem oben erläuterten Verfahren können die Seriennummern auf kleinere vorläufige Teilnehmer-Identifikationsnummern abgebildet werden, die als Identifier für den Registrierungs-Vorgang geeignet sind. In Verbindung mit dem Zeitversatz wird sichergestellt, dass die Antrags-Busnachrichten 17 auf dem Datenbus korrekt anhand der Identifier arbitriert werden und es zu keinen Kommunikationsproblemen kommt.

Nachfolgend wird ein zweites Ausführungsbeispiel des erfindungsgemäßen Verfahrens erläutert:

Bei diesem Verfahren wird nach dem Anschließen eines neuen Busteilnehmers eine Initialisierung gestartet, bei der der Datenbus vollständig hochgefahren wird. Beim Initialisieren werden alle Slave-Prozessorsysteme neu gestartet. Dies wird z.B. dadurch ausgeführt, dass deren Stromversorgung kurz aus- und dann wieder eingeschaltet wird. Das Master-Prozessorsystem bleibt hierbei unverändert in Betrieb.

Während der Initialisierung werden Busnachrichten mit einem Identifier verwendet, in welchem die vollständige Seriennummer eingetragen werden kann. Diese Busnachrichten entsprechen den Datentelegrammen der CAN-Spezifikation 2.0B mit einem 29 Bit Identifier. Jeder Busteilnehmer versendet eine entsprechende Antrags-Busnachricht, mit welcher er die Vergabe einer endgültigen Teilnehmer-Identifikationsnummer beantragt.

Jeder Busteilnehmer zählt die eingehenden Antrags-Busnachrichten, die anhand des Identifiers auf dem Datenbus arbitriert werden. Wenn ein Busteilnehmer feststellt, dass seine Antrags-Busnachricht über den Datenbus übertragen wird, übernimmt er die Nummer, die die Position in der Reihenfolge der übertragenen Antrags-Busnachrichten beschreibt, als endgültige Teilnehmer-Identifikationsnummern. D.h., dass die endgültigen Teilnehmer-Identifikationsnummern die Nummern in der Reihenfolge, mit welcher die jeweiligen Antrags-Busnachrichten auf den Datenbus übertragen werden, sind.

Die Initialisierung des Datenbusses ist abgeschlossen, wenn alle Busteilnehmer eine endgültige Teilnehmer-Identifikationsnummer besitzen. Die weitere Datenübertragung erfolgt dann mit Busnachrichten, die einen kürzeren Identifier aufweisen, in dem die endgültigen Teilnehmer-Identifikationsnummern eingetragen werden. Diese Busnachrichten entsprechen z.B. den Datentelegrammen der CAN-Spezifikation 2.0A mit einem 11 Bit Identifier.

Durch den Wechsel von Busnachrichten mit langem Identifier auf Busnachrichten mit kurzem Identifier wird die pro Busnachricht zu übertragende Datenmenge reduziert, wodurch der Durchsatz an Nutzdaten erhöht wird. Da Datenbusse zum Steuern von Geräten, die mehrere Module bzw. Baugruppen verbinden, technisch relativ einfach ausgebildet sind, besitzen Sie in der Regel keinen hohen Datendurchsatz. Deshalb ist es sehr vorteilhaft, wenn die zu übertragende Datenmenge möglichst klein gehalten werden kann, wie es mit den beiden oben beschriebenen Verfahren möglich ist.

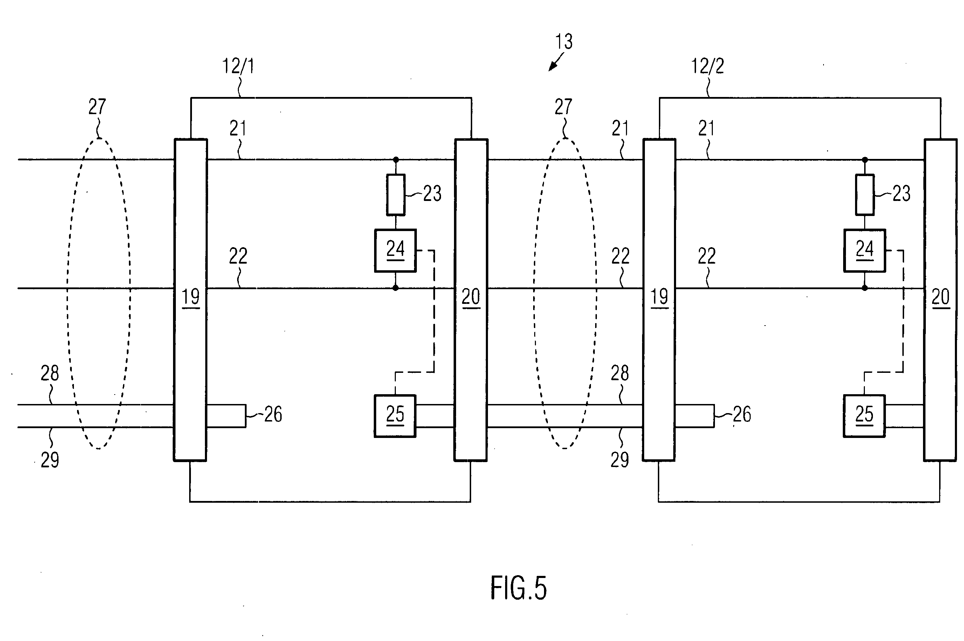

Figur 5 zeigt schematisch einen Ausschnitt eines erfindungsgemäßen Bussystems mit linearer Topologie. Hierin sind zwei Busteilnehmer 12/1 und 12/2 dargestellt, wobei der Busteilnehmer 12/2 das Ende das Datenbusses 13 bildet. Diese beiden Busteilnehmer weisen jeweils einen Eingangsstecker 19 und einen Ausgangsstecker 20 auf. Der Datenbus 13 umfasst zwei Signalleitungen 21, 22 für die differentielle Datenübertragung mit einen H-Signal und einem L-Signal, wie es z.B. beim CAN-Bus üblich ist. Zwischen den Signalleitungen 21, 22 ist auf den Busteilnehmern 12 jeweils ein Abschlusswiderstand 23 angeordnet, der in Reihe mit einem Schaltelement 24 geschaltet ist. Das Schaltelement 24 ist beispielsweise als Relais ausgebildet. Diese Reihenschaltung aus Abschlusswiderstand 23 und Schaltelement 24 verbindet die beiden Signalleitungen 21, 22. Ist das Schaltelement 24 geschlossen, so sind die beiden Signalleitungen 21, 22 über den Abschlusswiderstand 23 verbunden, der das Bussystem zur Vermeidung von Reflexionen durch offenen Leitungsenden abschließt.

Das Schaltelement 24 ist mit einer Steuerlogik 25 verbunden, die das Schaltelement 24 ansteuert. Die Steuerlogik ist mit zwei Steueranschlüssen des Ausgangssteckers 20 derart verbunden, dass es das Schaltelement 24 schließt, wenn die Steueranschlüsse des Ausgangssteckers 20 kurzgeschlossen sind.

Der Eingangsstecker 19 weist an den beiden zu den Steueranschlüssen des Ausgangssteckers 20 korrespondierenden Anschlüssen eine Brücke 26 auf, die die beiden Anschlüsse kurzschließt.

Zwei Busteilnehmer 12 werden mit einem Buskabel 27 verbunden, das die beiden Signalleitungen 21, 22, als auch zwei Steuerleitungen 28, 29 aufweist. Die Steuerleitung 28, 29 verbinden die Steueranschlüsse des Ausgangssteckers mit den Anschlüssen der Brücke am Eingangsstecker, so dass die Steueranschlüsse über die Brücke 26 kurzgeschlossen werden. Hierdurch wird die Steuerlogik 25 derart aktiviert, dass sie das Schaltelement 24 öffnet, wodurch der entsprechende Abschlusswiderstand 23 zwischen den Signalleitungen 21, 22 deaktiviert ist.

Der am Ende des Datenbusses angeordnete Busteilnehmer 12 - in Figur 5 ist es der Busteilnehmer 12/2 - ist über seinen Ausgangsstecker 20 mit keinem weiteren Busteilnehmer verbunden. Deshalb sind die Steueranschlüsse nicht kurzgeschlossen, wodurch die Steuerlogik 25 das Schaltelement 24 derart ansteuert, dass es geschlossen ist. Hierdurch ist der Abschlusswiderstand 23 zwischen den beiden Signalleitungen 21, 22 aktiv geschaltet und der Datenbus ordnungsgemäß abgeschlossen.

Das erfindungsgemäße Datenbussystem kann nach Belieben ohne spezielle Fachkenntnis um weitere Busteilnehmer erweitert bzw. verkürzt werden, die jeweils mittels eines Buskabels an den Ausgangsstecker des bisher letzten Busteilnehmers angeschlossen werden. Lediglich bei dem am Ende des Datenbusses angeordneten Busteilnehmer ist der Abschlusswiderstand aktiv. Beim Hinzufügen bzw. Abnehmen von Busteilnehmern muss nicht aktiv der Abschlusswiderstand geschaltet werden. Es ist auch nicht notwendig, dass der Abschlusswiderstand, wie es aus dem Stand der Technik bekannt ist, durch eine spezielle Mikroprozessorsteuerung zu bzw. abgeschaltet wird. Das erfindungsgemäße Datenbussystem ist äußerst einfach ausgebildet und gewährt absolute Sicherheit bezüglich eines korrekten Abschlusses des Datenbusses beim Ankoppeln bzw. Abkoppeln von Busteilnehmern.

Würde die Brücke zum Kurzschließen der Steueranschlüsse im Buskabel, insbesondere in dem in den Ausgangsstecker einzusteckenden Steckverbinder angeordnet sein, dann bestünde der Nachteil, dass wenn ein Buskabel in den Ausgangsstecker des am Ende angeordneten Busteilnehmers eingesteckt wird, dessen Abschlusswiderstand deaktiviert wird. Hierdurch wäre der Datenbus nicht abgeschlossen, was zu einer unerwünschten Fehlfunktion führen kann. Für die Erfindung ist es deshalb wesentlich, dass die Brücke am Busteilnehmer angeordnet ist.

Die erfindungsgemäßen Verfahren zum Betreiben eines Datenbusses können als Software-Module realisiert werden, die auf den einzelnen Busteilnehmern (Master-Prozessorsystem und Slave-Prozessorsysteme) verteilt gespeichert und ausführbar sind.

Die erfindungsgemäßen Verfahren und das erfindungsgemäße Datenbussystem sind besonders zur Anwendung in einem Drucker, insbesondere einem Hochleistungsdrucker, ausgebildet, da Hochleistungsdrucker Geräte sind, die modular aufgebaut sind und je nach den Anforderungen des Anwenders mit unterschiedlichen Modulen und Baugruppen konfiguriert werden. Mit dem erfindungsgemäßen Verfahren und dem erfindungsgemäßen Datenbussystem können die einzelnen Module und Baugruppen ausgetauscht werden, ohne dass bezüglich des Datenbusses manuell irgendwelche Einstellungen vorgenommen werden müssen.

Die Erfindung kann folgendermaßen kurz zusammengefasst werden:

Die Erfindung betrifft ein Verfahren zum Betreiben eines Datenbusses und ein Datenbussystem.

Mit dem erfindungsgemäßen Verfahren werden beim Anschließen neuer Busteilnehmer vorläufige Teilnehmer-Identifikationsnummern anhand der Seriennummern des jeweiligen Busteilnehmers ermittelt, diese als Identifier für Busnachrichten verwendet, mit welchen die Vergabe endgültiger Teilnehmer-Identifikationsnummern ausgeführt wird. Die endgültigen Teilnehmer-Identifikationsnummern sind kürzer als die Seriennummern, weshalb es im endgültigen Betrieb möglich ist, Busnachrichten mit entsprechend kurzen Identifiern zu verwenden.

Das erfindungsgemäße Datenbussystem ist derart ausgebildet, dass alleine durch das Anschließen eines neuen Busteilnehmers mit einem Buskabel an einen bestehenden Datenbus der Datenbus automatisch mit dem korrekten Wellenwiderstand abgeschlossen wird.

Sowohl das erfindungsgemäße Verfahren als auch das erfindungsgemäße Datenbussystem erleichtern das Ankoppeln bzw. Abkoppeln von Busteilnehmern.

Bezugszeichenliste

1   Einzelblattdrucker
2   Papiereingabeschacht
3   Transportweg
4   Druckwerk
5   Ausgabeschacht
6   Walzenpaar
7   Druckwalze
8   Farbauftragswalze
9   Vorratsbehälter
10  Zuführleitung
11  Ventil
12  Busteilnehmer / Slave-Prozessorsystem
13  Datenbus
14  zentrale Steuereinrichtung / Master-Prozessorsystem
15  Speichermedium
16  Start-Busnachricht
17  Antrags-Busnachricht
18  Registrierungs-Busnachricht
19  Eingangsstecker
20  Ausgangsstecker
21  Signalleitung
22  Signalleitung
23  Abschlusswiderstand
24  Schaltelement
25  Steuerlogik
26  Brücke
27  Buskabel
28  Steuerleitung
29  Steuerleitung

## Patentansprüche

1. Verfahren zum Betreiben eines Datenbusses, insbesondere zum Steuern von Geräten, an denen mehrere Busteilnehmer mit jeweils einer für sie spezifischen Seriennummer angeschlossen sind, wie z.B. von Druckern (1), umfassend folgende Schritte:

   - Anschließen eines neuen Busteilnehmers (12) an den Datenbus (13),
   - Erzeugen einer Antrags-Busnachricht (17) durch den neuen Busteilnehmer (12), die als Identifier eine vorläufige Teilnehmer-Identifikationsnummer enthält, die von der Seriennummer des Busteilnehmers (12) abgeleitet ist, wobei die Antrags-Busnachricht (17) mittels des Identifiers auf dem Datenbus (13) arbitriert wird,
   - Vergabe einer endgültigen Teilnehmer-Identifikationsnummer für den neuen Busteilnehmer (12) nach dem Empfang der Antrags-Busnachricht (17) mit der vorläufigen Teilnehmer-Identifikationsnummer, wobei die endgültige Teilnehmer-Identifikationsnummer weniger Stellen als die Seriennummer aufweist, und
   - Verwenden der endgültigen Teilnehmer-Identifikationsnummer durch den neuen Busteilnehmer (12) als Identifier für weitere Busnachrichten, wobei beim Anschließen eines neuen Busteilnehmers (12) zusätzlich zur vorläufigen Teilnehmer-Identifikationsnummer ein Zeitversatz (ZV) für die Antrags-Busnachricht (17) ermittelt wird, der auch von der Seriennummer abgeleitet wird, damit ein gleichzeitiges Übertragen zweier Antrags-Busnachrichten (17) mit der gleichen vorläufigen Teilnehmer-Identifikationsnummer vermieden wird.

2. Verfahren nach Anspruch 1,
   **dadurch gekennzeichnet,**
   **dass** der Zeitversatz durch Division ohne Rest der Seriennummer durch die maximale Anzahl vorläufiger Teilnehmer-Identifikationsnummern multipliziert mit einem Zeitintervall berechnet wird, wobei das Zeitintervall derart bemessen ist, dass innerhalb dieses Zeitintervalls eine der maximalen Anzahl von Busteilnehmern (12) entsprechende Anzahl an Antrags-Busnachrichten (17) übertragen werden kann.

3. Verfahren nach Anspruch 1 oder 2,
**dadurch gekennzeichnet,**
**dass** die vorläufige Teilnehmer-Identifikationsnummer aus der Seriennummer durch Modulo mit der maximalen Anzahl vorläufiger Teilnehmer-Identifikationsnummern ermittelt wird.

4. Verfahren nach einem der Ansprüche 1 bis 3,
**dadurch gekennzeichnet,**
**dass** einer der Busteilnehmer (12) ein den Datenbus (13) steuerndes Master-Prozessorsystem (14) ist und die anderen Busteilnehmer Slave-Prozessorsysteme (12) sind, und das Master-Prozessorsystem (14) die endgültige Teilnehmer-Identifikationsnummern ermittelt.

5. Verfahren nach Anspruch 4,
**dadurch gekennzeichnet,**
**dass** nach dem Anschließen eines neuen Busteilnehmers (12) dieser eine Melde-Busnachricht mit einem speziellen Identifier absendet, wobei dieser Identifier bedeutet dass ein neuer Busteilnehmer angeschlossen worden ist, woraufhin das Master-Prozessorsystem eine Start-Busnachricht (16) absendet, auf die zumindest alle neu angeschlossenen Busteilnehmer mit der Antrags-Busnachricht (17) antworten, und
das Master-Prozessorsystem (14) nach Empfang der Antrags-Busnachricht(en) (17) an zumindest alle neu angeschlossenen Busteilnehmer (12) eine Registrierungs-Busnachricht (18) übersendet, mit welcher die endgültige Teilnehmer-Identifikationsnummer übermittelt wird.

6. Verfahren nach Anspruch 5,
**dadurch gekennzeichnet,**
**dass** die Antrags-Busnachricht (17) die Seriennummer des neu angeschlossenen Busteilnehmers (12) enthält und die Registrierungs-Busnachricht (18) als Identifier die vorläufige Teilnehmer-Identifikationsnummer enthält, wobei mit der Registrierungs-Busnachricht (18) die Seriennummer und die endgültige Teilnehmer-Identifikationsnummer übermittelt werden, wobei die neu angeschlossenen Busteilnehmer (12) anhand der mit der Registrierungs-Busnachricht (18) übermittelten Seriennummer feststellt, ob die Registrierungs-Busnachricht (18) für ihn bestimmt ist.

7. Verfahren zum Betreiben eines Datenbusses, insbesondere zum Steuern von Geräten, an denen mehrere Busteilnehmer mit jeweils einer für sie spezifischen Seriennummer angeschlossen sind, wie z.B. von Druckern (1), umfassend folgende Schritte:

- Anschließen eines neuen Busteilnehmers (12) an den Datenbus (13),
- Erzeugen einer Antrags-Busnachricht (17) durch den neuen Busteilnehmer (12), die als Identifier eine vorläufige Teilnehmer-Identifikationsnummer enthält, die von der Seriennummer des Busteilnehmers (12) abgeleitet ist, wobei die Antrags-Busnachricht (17) mittels des Identifiers auf dem Datenbus (13) arbitriert wird,
- Vergabe einer endgültigen Teilnehmer-Identifikationsnummer für den neuen Busteilnehmer (12) nach dem Empfang der Antrags-Busnachricht (17) mit der vorläufigen Teilnehmer-Identifikationsnummer, wobei die endgültige Teilnehmer-Identifikationsnummer weniger Stellen als die Seriennummer aufweist, und
- Verwenden der endgültigen Teilnehmer-Identifikationsnummer durch den neuen Busteilnehmer (12) als Identifier für weitere Busnachrichten, wobei
nach dem Anschließen eines neuen Busteilnehmers (12) der Datenbus initialisiert wird, wobei während des Initialisierens Busnachrichten mit einem Identifier verwendet werden, in welchen die vollständige Seriennummer als Identifier eingetragen wird, und jeder Busteilnehmer (12) eine entsprechende Antrags-Busnachricht zur Vergabe der endgültigen Teilnehmer-Identifikationsnummer abschickt, und
nach dem Initialisieren ein anderer Typ von Busnachrichten verwendet wird, der einen kürzeren Identifier aufweist, in dem die endgültigen Teilnehmer-Identifikationsnummern eintragbar ist.

8. Verfahren nach Anspruch 7,
**dadurch gekennzeichnet,**
**dass** ein jeder Busteilnehmer (12) die Anzahl der empfangenen Antrags-Busnachrichten zählt und für sich als endgültige Teilnehmer-Identifikationsnummer die Zahl vermerkt, die der Position seiner eigenen Antrags-Busnachricht in der Reihenfolge von Antrags-Busnachrichten entspricht.

9. Datenbussystem umfassend
Datenleitungen (21, 22) und mehrere mittels der Datenleitungen (21, 22) verbundene Busteilnehmer (12), die jeweils durch ein Mikroprozessorsystem dargestellt werden, wobei
die Busteilnehmer (12) jeweils einen Eingangsstecker (19) und einen Ausgangsstecker (20) derart aufweisen, dass der jeweilige Busteilnehmer (12) mittels des Eingangssteckers (19) an einen bestehenden Datenbus (13) anschließbar ist und an den Ausgangsstecker (20) eine Erweiterung des Datenbusses (13) zu einem weiteren Busteilnehmer (12) anschließbar ist, wobei die Busteilnehmer (12) jeweils einen Abschlusswiderstand (23) zum Abschließen der Datenleitungen (21, 22) aufweisen, und die Abschlusswiderstände (23) jeweils in Reihe mit einem Schaltelement (24) geschaltet sind, das mit einer Steuerlogik (25) zum Ansteuern des Schaltelementes (24) verbunden ist, wobei die Steuerlogik (25) mit zwei Steuer-Anschlüssen des Ausgangssteckers (20) derart verbunden ist, dass es das entsprechende Schaltelement (24) öffnet, falls diese beiden Anschlüsse des Ausgangssteckers (20) kurzgeschlossen sind, und der Eingangsstecker (19) dieser Busteilnehmer (12) an den zu den beiden Steueranschlüssen des Ausgangssteckers (20) korrespondierenden Anschlüsse eine Brücke (26) aufweist, was beim letzten Busteilnehmer (12) dann dazu führt, dass dessen Steuerleitungen am Stecker (20) offen bleiben und die Steuerlogik (25) das Schaltelement (24) geschlossen lässt, was den Bus somit im Bereich des letzten Busteilnehmers (12) terminiert, dass die als Prozessorsysteme ausgebildeten Busteilnehmer mit Softwaremodulen zum Ausführen des Verfahrens nach einem der Ansprüche 1 bis 8 versehen sind.

10. Datenbussystem nach Anspruch 9,
**dadurch gekennzeichnet,**
**dass** das Schaltelement (24) ein Relais ist.

11. Datenbussystem nach Anspruch 9 oder 10,
**dadurch gekennzeichnet,**
**dass** die Datenleitungen als differentielle Signalleitungen (21, 22) ausgebildet sind.

12. Datenbussystem nach einem der Ansprüche 9 bis 11,
**dadurch gekennzeichnet,**
**dass** der Datenbus (13) als CAN-Bus ausgebildet ist.

13. Softwaremodul für einen Datenbus,
**dadurch gekennzeichnet,**
**dass** das Softwaremodul zum Ausführen des Verfahrens nach einem der Ansprüche 1 bis 8 ausgebildet ist.

14. Drucker, insbesondere elektrofotografischer Hochleistungsdrucker, mit mehreren Baugruppen, die mit einem Datenbus miteinander verbunden sind, wobei der Datenbus gemäß einem der Verfahren nach einem der Ansprüche 1 bis 8 betrieben wird.

15. Drucker, insbesondere elektrofotografischer Hochleistungsdrucker, wobei die Baugruppen mit einem Datenbussystem gemäß einem der Ansprüche 9 bis 12 verbunden sind.

**Claims**

1. A method for operating a data bus, in particular for the control of apparatuses to which multiple bus participants with a respective serial number specific to them are connected, such as printers (1), comprising the following steps:

   - connection of a new bus participant (12) to the data bus (13),
   - generation of an application bus message (17) by the new bus participant (12), which message contains a preliminary participant identification number as an identifier, which number is derived from the serial number of the bus participant (12), wherein the application bus message (17) is arbitrated in the data bus (13) by means of the identifier,
   - assignment of a final participant identification number for the new bus participant (12) after the receipt of the application bus message (17) with the preliminary participant identification number, wherein the final participant identification number possesses fewer digits than the serial number, and
   - use of the final participant identification number by the new bus participant (12) as an identifier for further bus messages, wherein upon connection of a new bus participant (12), a time offset (ZV) for the application bus message (17) is determined in addition to the preliminary participant identification number, which time offset (ZV) is also derived from the serial number so that a simultaneous transmission of two application bus messages (17) with the same preliminary participant identification number is avoided.

2. The method according to claim 1,
**characterized in that**
the time offset is calculated via division without remainder of the serial number by the maximum number of preliminary participant identification numbers, multiplied with a time interval, wherein the time interval is dimensioned such that a number of application bus messages (17) corresponding to the maximum number of bus participants (12) can be transferred within this time interval.

3. The method according to claim 1 or 2, **characterized in that**
the preliminary participant identification number is determined from the serial number via modulo with the maximum number of preliminary participant identification numbers.

4. The method according to one of the claims 1 to 3,
**characterized in that**

one of the bus participants (12) is a master processor system (14) controlling the data bus (13), and the other bus participants are slave processor systems (12), and the master processor system (14) determines the final participant identification numbers.

**5.** The method according to claim 4,
**characterized in that**
after connection of a new bus participant (12), this sends out a notification bus message with a special identifier, wherein this identifier indicates that a new bus participant has been connected,
whereupon the master processor systems sends out a start bus message (16) to which at least all newly connected bus participants respond with the application bus message (17), and
after receiving the application bus message(s) (17), the master processor system (14) transmits to at least all newly connected bus participants (12) a registration bus message (18) with which the final participant identification number is determined.

**6.** The method according to claim 5,
**characterized in that**
the application bus message (17) contains the serial number of the newly connected bus participant (12), and the registration bus message (18) contains as an identifier the preliminary participant identification number,
wherein the serial number and the final participant identification number are transmitted with the registration bus message (18), wherein the newly connected bus participant (12) establishes - using the serial number transmitted with the registration bus message (18) - whether the registration bus message (18) is intended for it.

**7.** A method for operating a data bus, in particular for the control of apparatuses to which multiple bus participants with a respective serial number specific to them are connected, such as printers (1), comprising the following steps:

- connection of a new bus participant (12) to the data bus (13),
- generation of an application bus message (17) by the new bus participant (12), which message contains a preliminary participant identification number as an identifier, which number is derived from the serial number of the bus participant (12), wherein the application bus message (17) is arbitrated in the data bus (13) by means of the identifier,
- assignment of a final participant identification number for the new bus participant (12) after the receipt of the application bus message (17) with the preliminary participant identification number, wherein the final participant identification number possesses fewer digits than the serial number, and
- use of the final participant identification number by the new bus participant (12) as an identifier for further bus messages, wherein after the connection of a new bus participant (12), the data bus is initialized, wherein during the initialization bus messages are used with an identifier in which the complete serial number is entered as an identifier, and each bus participant (12) sends a corresponding application bus message for allocation of the final participant identification number, and
after the initialization a different type of bus messages is used that possesses a shorter identifier in which the final participant identification numbers can be entered.

**8.** The method according to claim 7,
**characterized in that**
each bus participant (12) counts the number of received application bus messages and notes for itself as a final participant identification number the number that corresponds to the position of its own application bus message in the order of application bus messages.

**9.** A data bus system comprising
data lines (21, 22) and multiple bus participants (12) connected with the data lines (21, 22), which bus participants (12) are respectively represented by a microprocessor system, wherein
the bus participants (12) respectively possess an input plug (19) and an output plug (20) such that the respective bus participant (12) can be connected to an existing data bus (13) by means of the input plug (19), and an extension of the data bus (13) to an additional bus participant (12) can be connected at the output plug (20),
wherein the bus participants (12) respectively possess a termination resistor (23) to terminate the data lines (21, 22), and the termination resistors (23) are respectively connected in series with a switching element (24) that is connected with a control logic (25) to activate said switching element (24),
wherein the control logic (25) is connected with two control terminals of the output plug (20) such that it opens the corresponding switching element (24) in the event that these two terminals of the output plug (20) are shorted, and the input plug (19) of these bus participants (12) possesses a bridge (26) at the terminals corresponding to the two control terminals of the output plug (20), which - at the last bus participant (12) - then leads to the situation that its control lines remain open at the plug (20) and the control logic (25) keeps the switching element (24) closed, which thus terminates the bus in the region of the last bus participant (12), and that the bus participants designed as processor systems are provided with software modules to execute the method according to any of the claims 1 to 9.

**10.** The data bus system according to claim 9, **characterized in that** the switching element (24) is a relay.

**11.** The data bus system according to claim 9 or 10, **characterized in that** the data lines are fashioned as differential signal lines (21, 22).

**12.** The data bus system according to one of the claims 9 to 11, **characterized in that** the data bus (13) is fashioned as a CAN bus.

**13.** A software module for a data bus, **characterized in that** the software module is fashioned to execute the method according to any of the claims 1 to 8.

**14.** A printer, in particular electrophotographic high-capacity printer, with multiple assemblies, that are connected with one another with a data bus, wherein the data bus is operated according to any of the methods according to any of the claims 1 to 8.

**15.** A printer, in particular electrophotographic high-capacity printer, wherein the assemblies are connected to a data bus system according to one of the claims 9 to 12.

**Revendications**

**1.** Procédé pour faire fonctionner un bus de données, notamment pour commander des appareils auxquels sont raccordés plusieurs utilisateurs de bus dotés chacun d'un numéro de série qui leur est spécifique, comme par exemple des appareils d'impression (1), ledit procédé comportant les étapes suivantes :

- le raccordement d'un nouvel utilisateur de bus (12) au bus de données (13),
- la génération, par le nouvel utilisateur de bus (12), d'un message de requête sur bus (17) qui contient comme identifiant un numéro d'identification d'utilisateur provisoire qui est déduit du numéro de série de l'utilisateur de bus (12), le message de requête sur bus (17) étant arbitré sur le bus de données (13) au moyen de l'identifiant,
- l'attribution d'un numéro d'identification d'utilisateur définitif au nouvel utilisateur de bus (12) après la réception du message de requête sur bus (17) doté du numéro d'identification d'utilisateur provisoire, le numéro d'identification d'utilisateur définitif possédant moins de chiffres que le numéro de série, et
- l'utilisation du numéro d'identification d'utilisateur définitif par le nouvel utilisateur de bus (12) comme identifiant pour d'autres messages sur bus, de façon que, lors du raccordement d'un nouvel utilisateur de bus (12), un décalage temporel (ZV), qui est également déduit du numéro de série, soit défini pour le message de requête sur bus (17), en plus du numéro d'identification d'utilisateur provisoire, afin d'éviter de transmettre en même temps deux messages de requête sur bus (17) ayant le même numéro d'identification d'utilisateur provisoire.

**2.** Procédé selon la revendication 1, **caractérisé en ce que** le décalage temporel est calculé en effectuant une division sans reste du numéro de série par le nombre maximum de numéros d'identification d'utilisateur provisoires multiplié par un intervalle de temps, l'intervalle de temps étant mesuré de façon à ce qu'un nombre de messages de requête sur bus (17), correspondant au nombre maximum d'utilisateurs de bus (12), soit transmis pendant cet intervalle de temps.

**3.** Procédé selon la revendication 1 ou 2, **caractérisé en ce que** le numéro d'identification d'utilisateur provisoire est déterminé à partir du numéro de série en effectuant une opération modulo sur le nombre maximum de numéros d'identification d'utilisateur provisoires.

**4.** Procédé selon l'une des revendications 1 à 3, **caractérisé en ce que** l'un des utilisateurs de bus (12) est un système de processeurs maître (14) commandant le bus de données (13), et les autres utilisateurs de bus sont des systèmes de processeurs esclaves (12), et le système de processeurs maître (14) détermine les numéros d'identification d'utilisateur définitifs.

**5.** Procédé selon la revendication 4, **caractérisé en ce que**, après le raccordement d'un nouvel utilisateur de bus (12), celui-ci envoie un message d'information sur bus comportant un identifiant spécial, cet identifiant indiquant qu'un nouvel utilisateur de bus a été raccordé, puis le système de processeurs maître envoie un message de départ sur bus (16) auquel au moins tous les utilisateurs de bus nouvellement raccordés répondent par le message de requête sur bus (17), et
le système de processeurs maître (14) transmet, après réception du ou des messages de requête sur bus (17), à au moins tous les utilisateurs de bus (12) nouvellement raccordés, un message d'enregistrement sur bus (18) avec lequel le numéro d'identification d'utilisateur définitif est transmis.

6. Procédé selon la revendication 5, **caractérisé en ce que** le message de requête sur bus (17) contient le numéro de série de l'utilisateur de bus (12) nouvellement raccordé, et le message d'enregistrement sur bus (18) contient comme identifiant le numéro d'identification d'utilisateur provisoire, le numéro de série et le numéro d'identification d'utilisateur définitif étant transmis avec le message d'enregistrement sur bus (18), les utilisateurs de bus (12) nouvellement raccordés déterminant, à partir du numéro de série transmis avec le message d'enregistrement sur bus (18), si le message d'enregistrement sur bus (18) lui est destiné.

7. Procédé pour faire fonctionner un bus de données, notamment pour commander des appareils auxquels sont raccordés plusieurs utilisateurs de bus possédant chacun un numéro de série qui leur est spécifique, comme par exemple des appareils d'impression (1), ledit procédé comportant les étapes suivantes :

   - le raccordement d'un nouvel utilisateur de bus (12) au bus de données (13),
   - la génération, par le nouvel utilisateur de bus (12), d'un message de requête sur bus (17) qui contient comme identifiant un numéro d'identification d'utilisateur provisoire qui est déduit du numéro de série de l'utilisateur de bus (12), le message de requête sur bus (17) étant arbitré sur le bus de données (13) au moyen de l'identifiant,
   - l'attribution d'un numéro d'identification d'utilisateur définitif au nouvel utilisateur de bus (12) après la réception du message de requête sur bus (17) doté du numéro d'identification d'utilisateur provisoire, le numéro d'identification d'utilisateur définitif possédant moins de chiffres que le numéro de série, et
   - l'utilisation du numéro d'identification d'utilisateur définitif par le nouvel utilisateur de bus (12) comme identifiant pour d'autres messages sur bus, le bus de données étant initialisé après le raccordement d'un nouvel utilisateur de bus (12), des messages sur bus dotés d'un identifiant étant utilisés pendant l'initialisation, messages dans lesquels le numéro de série complet est inséré comme identifiant, et chaque utilisateur de bus (12) envoyant un message de requête sur bus correspondant pour attribuer le numéro d'identification d'utilisateur définitif, et un autre type de message sur bus étant utilisé après l'initialisation, lequel message comporte un identifiant plus court dans lequel les numéros d'identification d'utilisateur définitifs peuvent être insérés.

8. Procédé selon la revendication 7, **caractérisé en ce que** tout utilisateur de bus (12) compte le nombre de messages de requête sur bus reçus, et retient, comme numéro d'identification d'utilisateur définitif, le nombre qui correspond à la position de son propre message de requête sur bus dans la série des messages de requête sur bus.

9. Système de bus de données, comportant des lignes de données (21, 22) et plusieurs utilisateurs de bus (12) reliés au moyen des lignes de données (21, 22), et représentés chacun par un système de microprocesseurs,
   les utilisateurs de bus (12) comportant chacun un connecteur d'entrée (19) et un connecteur de sortie (20), de sorte que l'utilisateur de bus respectif (12) peut être raccordé à un bus de données existant (13) au moyen du connecteur d'entrée (19), et qu'une extension du bus de données (13) vers un autre utilisateur de bus (12) peut être raccordée au connecteur de sortie (20), les utilisateurs de bus (12) comportant chacun une résistance de charge (23) destinée à charger les lignes de données (21, 22), et les résistances de charge (23) étant montées chacune en série avec un élément de commutation (24) qui est relié à une logique de commande (25) destinée à commander l'élément de commutation (24), la logique de commande (25) étant reliée à deux bornes de commande du connecteur de sortie (20) de façon à ouvrir l'élément de commutation correspondant (24) lorsque ces deux bornes du connecteur de sortie (20) sont mises en court-circuit, et le connecteur d'entrée (19) de cet utilisateur de bus (12) comportant un pont (26) au niveau des bornes correspondant aux deux bornes de commande du connecteur de sortie (20), ce qui a alors pour conséquence, chez le dernier utilisateur de bus (12), que les lignes de commande de celui-ci restent ouvertes au niveau du connecteur (20), et la logique de commande (25) laisse l'élément de commutation (24) fermé, ce qui termine ainsi le bus au niveau du dernier utilisateur de bus (12), de sorte que les utilisateurs de bus conformé en système de processeurs sont dotés de modules logiciels destinés à mettre en oeuvre le procédé selon l'une des revendications 1 à 8.

10. Système de bus de données selon la revendication 9, **caractérisé en ce que** l'élément de commutation (24) est un relais.

11. Système de bus de données selon la revendication 9 ou 10, **caractérisé en ce que** les lignes de données sont conformées en lignes de signal différentielles (21, 22).

12. Système de bus de données selon l'une des revendications 9 à 11, **caractérisé en ce que** le bus de données (13) est conformé en bus CAN.

13. Module logiciel destiné à un bus de données, **caractérisé en ce que** le module logiciel est conformé pour mettre en oeuvre le procédé selon l'une des revendications 1 à 8.

14. Appareil d'impression, notamment appareil d'impression électrophotographique de grande puissance, comportant plusieurs blocs qui sont reliés entre eux par un bus de données, le bus de données fonctionnant conformément à l'un des procédés selon l'une des revendications 1 à 8.

15. Appareil d'impression, notamment appareil d'impression électrophotographique de grande puissance, dans lequel les blocs sont raccordés à un système de bus de données selon l'une des revendications 9 à 12.

FIG.1

FIG.2

| SE | ZV | VTI |
|---|---|---|
| 0 | 0 | 1 |
| 1 | 0 | 2 |
| 125 | 0 | 126 |
| 126 | 1 | 1 |
| 251 | 1 | 126 |
| 252 | 2 | 1 |
| 377 | 2 | 126 |
| 378 | 3 | 1 |
| 503 | 3 | 126 |
| 504 | 4 | 1 |
| ..... | ..... | ..... |
| | | |
| 999997 | 7936 | 62 |
| 999998 | 7936 | 63 |
| 999999 | 7936 | 64 |

FIG.3

FIG.4

FIG.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004062219 A
- WO 02056545 A2
- DE 29907265 U1
- DE 19713240 C2
- EP 0493905 A1
- WO 9407318 A

**In der Beschreibung aufgeführte Nicht-Patentliteratur**

- CAN - Controller Area Network, Grundlagen und Praxis. 1997
- Identifier zuordnen und Nachrichten austauschen. **Etschberger ; Konrad.** PRAXIS Profiline - Controller Area Network. 1998, 40-43
- Jeder darf Senden und alle Empfangen; CAN-Kommunikation und Bus-Arbitrierung. **Zeltwanger ; Holger.** Praxis Profiline-Controller Area Network. 1998, 5-7